# FASCICULE DE BREVET EUROPEEN

(11) **EP 4 252 439 B1**
(45) Date de publication et mention de la délivrance du brevet: **27.11.2024**
(21) Numéro de dépôt: 21810657.3
(22) Date de dépôt: 21.10.2021
(51) Int. Cl.: H04W 4/48

(54) **GESTION D'INTERFÉRENCES SUR UN CANAL V2X PAR DÉSACTIVATION D'UNE FONCTION SUR UN VÉHICULE**
VERWALTUNG VON INTERFERENZEN AUF EINEM V2X-KANAL DURCH DEAKTIVIERUNG EINER FUNKTION IN EINEM FAHRZEUG
MANAGEMENT OF INTERFERENCE ON A V2X CHANNEL, BY DISABLING A FUNCTION ON A VEHICLE

(30) Priorité: 30.11.2020 FR 2012355
(43) Date de publication de la demande: 04.10.2023
(73) Titulaire: Stellantis Auto SAS, 78300 Poissy (FR)
(72) Inventeur: LADHARI, Fadi, 94270 Le Kremlin Bicetre (FR); LIN, Trista, 28210 Villemeux sur Eure (FR)
(86) Numéro de dépôt international: PCT/FR2021/051843
(87) Numéro de publication internationale: WO 2022/112673

(56) Documents cités:
- WO-A1-2020/194446
- US-A1- 2018 192 266

## Description

La présente invention appartient au domaine des réseaux de communication sans-fil utilisés par un véhicule terrestre à moteur. En particulier, il concerne la gestion d'interférences sur un canal V2X entre un terminal utilisateur et un véhicule.

On entend par « véhicule terrestre à moteur » tout type de véhicule tel qu'un véhicule automobile, un cyclomoteur, une motocyclette, un robot de stockage dans un entrepôt, etc.

Les nouveaux standards de télécommunication sans-fil comportent des spécifications dédiées à des applications automobiles. Ainsi, des canaux de communication sans-fil courte portée véhicule à tout, dit canaux V2X, ont été spécifiés.

Un premier type de canal V2X est fondé sur les standards wifi (IEEE 802.11p) et prend en charge des communications entre véhicules et entre véhicules et infrastructures.

Un deuxième type de canal V2X est fondé sur les standards cellulaires, et notamment sur la norme 5G. Ce deuxième type de canal V2X prend en charge des communications entre véhicules, entre véhicules et infrastructures ou encore entre véhicule et réseau cellulaire. Ce type de canal existant en parallèle des canaux cellulaires classiques, il est notamment appelé « sidelink », pour lien de côté en français, ou encore « PC5 » et s'inscrit dans le cadre des normes C-V2X.

Les communications V2X peuvent également être mises en oeuvre par un terminal utilisateur.

On entend par « terminal utilisateur » tout dispositif électronique d'un utilisateur. Un smartphone, pour téléphone intelligent, une tablette tactile, un ordinateur portable ou encore tout type d'objet connecté tel qu'une montre, des oreillettes ou des lunettes sont des exemples de terminaux utilisateurs.

Aussi, lorsqu'un véhicule est en fonctionnement, il est probable que plusieurs antennes V2X communiquent sur le même canal V2X. Ces communications simultanées ne sont pas souhaitables.

En effet, un partage en créneaux temporels est prévu sur un canal V2X. En particulier, le canal est occupé lorsque l'un des terminaux V2X émet un paquet V2X. Aussi, si deux terminaux émettent en même temps, une interférence intervient et le créneau temporel est perdu.

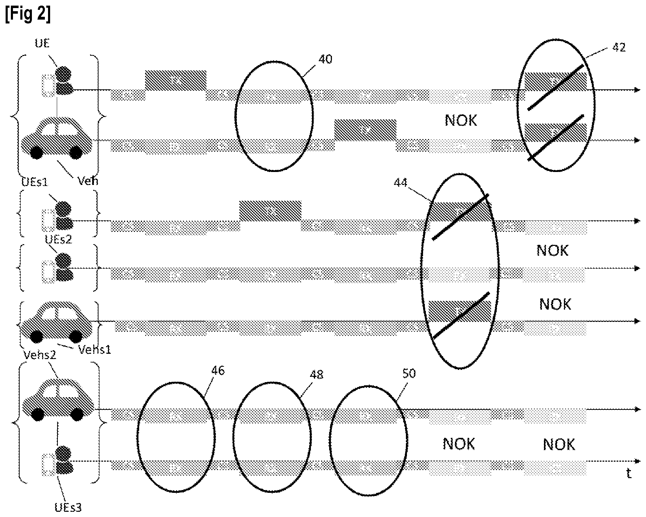

En particulier, un des problèmes liés à de telles interférences est décrit en référence à une figure 2.

Sur la figure 2, un terminal utilisateur UE est présent à l'intérieur d'un véhicule Veh. Par ailleurs, un deuxième terminal utilisateur UEs1, un troisième terminal utilisateur UEs2, un deuxième véhicule Vehs1 sont à portée de communications par le canal V2X. En outre, un troisième véhicule Vehs2 à l'intérieur duquel est présent un quatrième terminal utilisateur UEs3 est également à portée de communications par le canal V2X.

Pour chacune des entités (véhicules et terminaux utilisateurs), un axe temporel est représenté. Sur chacun de ces axes, l'entité émet (cases TX), reçoit (cases RX) ou est inactif en attente passive de réception (cases CS). Dans la suite, on entend par créneau une case d'émission ou de réception, les axes comprennent donc cinq créneaux sur la figure 2 (le premier créneau est à gauche et le cinquième à droite).

Dans le premier créneau, UE émet sur le canal V2X. Le paquet émis est reçu par toutes les entités écoutant le canal V2X, et donc notamment deux fois à la référence 46 par un occupant du véhicule Vehs2 (sur le véhicule et sur le terminal UEs3). De même, au niveau du deuxième créneau, où la réception est inutilement dupliquée au niveau des références 40 et 48, et au niveau du troisième créneau, où la réception est inutilement dupliquée au niveau de la référence 50.

Dans le quatrième créneau, au niveau de la référence 44, le terminal UEs1 et le véhicule Vehs1 émettent en même temps sur le canal V2X, ce qui génère une interférence insurmontable sur le canal V2X et donc la perte du créneau (aucune entité ne peut rien recevoir sur ce créneau). De même au niveau du cinquième créneau, un conflit à l'émission intervient au niveau du véhicule Veh et du terminal UE, référence 42. 11

Des exemples de l'état de la technique peuvent être trouvé dans les documents WO 2020/194446 A1 et US 2018/192266 A1.

La présente invention vient améliorer la situation.

A cet effet, un premier aspect de l'invention concerne un procédé de de gestion d'interférences liées à l'utilisation d'un même canal de communication courte portée véhicule à tout, dit canal V2X, par un terminal utilisateur et par un véhicule terrestre à moteur, le procédé comportant, au niveau du véhicule, les étapes de :
- identification de la présence du terminal utilisateur à l'intérieur du véhicule et d'une capacité du terminal utilisateur de communiquer sur le canal V2X ;
- transmission au terminal utilisateur identifié d'une requête de désactivation sur le terminal utilisateur d'au moins une fonction de communication fondée sur le canal V2X ;
- sur réception d'un refus de désactivation de la fonction depuis le terminal utilisateur, désactivation sur le véhicule d'au moins une deuxième fonction de communication fondée sur le canal V2X.

Une méthode simple et efficace pour réduire les interférences sur le canal V2X est ainsi mise en place. En effet, le nombre d'étapes de traitement est réduit et n'implique aucun procédé de traitement de signal habituellement mis en place pour limiter les interférences.

L'utilisateur du terminal utilisateur peut continuer vouloir bénéficier du canal V2X directement sur son terminal, le procédé rend cela possible tout en traitant les problèmes d'interférences détaillés ci-avant à la figure 2.

On entend par « même canal de communication sans-fil courte portée véhicule à tout », une même manière de communiquer selon un protocole V2X (par exemple IEEE 802.11p ou Sidelink PC5). Toutes communications selon ladite manière de communiquer et susceptibles de générer une interférence sont ainsi ici échangées sur le même canal V2X. Ainsi, deux communications peuvent être faites sur un même canal V2X même si des paramètres, tels que des paramètres physiques spécifiques du signal radiofréquence (modulation, polarisation, etc.), différent entre les deux communications.

Dans un mode de réalisation, la fonction de communication et la deuxième fonction de communication sont identiques.

Dans un autre mode de réalisation, le procédé comporte en outre, après l'étape de désactivation, les étapes de :
- détection d'un départ du terminal utilisateur de l'intérieur du véhicule ;
- sur détection du départ, réactivation de la deuxième fonction de communication fondée sur le canal V2X.

Dans un autre mode de réalisation, le canal V2X est configuré pour proposer un service à l'utilisateur, le procédé comportant en outre les étapes de :
- réception de données relatives au service depuis le terminal utilisateur, les données ayant été reçue par le canal V2X du terminal utilisateur ;
- duplication du service sur un système d'info-divertissement du véhicule.

En particulier, dans un autre mode de réalisation, le duplication du service est fondée sur canal secondaire, le canal secondaire étant l'un des canaux suivants :
- canal filaire selon un protocole de type bus universel en série, Universal Serial Bus, USB;
- canal sans-fil courte-portée selon un protocole de type wifi ;
- canal sans-fil courte-portée selon un protocole de type bluetooth.

Un terminal utilisateur relié à un tel canal secondaire implique qu'il est dans le véhicule. Il est donc facile et efficace d'identifier le terminal.

Dans un mode de réalisation, le canal V2X fonctionne selon l'un au moins des protocoles suivant :
- 3GPP C-V2X avec une interface PC5 ;
- 802.11p.

Un deuxième aspect de l'invention concerne un programme informatique comportant des instructions pour la mise en oeuvre du procédé selon le premier aspect de l'invention, lorsque ces instructions sont exécutées par un processeur.

Un troisième aspect de l'invention concerne un dispositif gestion d'interférences liées à l'utilisation d'un même canal de communication courte portée véhicule à tout, dit canal V2X, par un terminal utilisateur et par un véhicule terrestre à moteur, le dispositif étant configuré pour être compris dans le véhicule et comportant au moins une mémoire et au moins un processeur agencés pour effectuer les opérations de :
- identification de la présence du terminal utilisateur à l'intérieur du véhicule et d'une capacité du terminal utilisateur de communiquer sur le canal V2X ;
- transmission au terminal utilisateur identifié d'une requête de désactivation sur le terminal utilisateur d'au moins une première fonction de communication fondée sur le canal V2X ;
- sur réception d'un refus de désactivation de la première fonction depuis le terminal utilisateur, désactivation sur le véhicule d'au moins une deuxième fonction de communication fondée sur le canal V2X.

Un quatrième aspect de l'invention concerne un véhicule configuré pour comprendre le dispositif selon le troisième aspect de l'invention.

D'autres caractéristiques et avantages de l'invention apparaîtront à l'examen de la description détaillée ci-après, et des dessins annexés sur lesquels :
[Fig 1] est un diagramme illustrant les étapes d'un procédé selon un mode de réalisation de l'invention ;
[Fig 2] est un schéma illustrant des aspects temporels d'un échange V2X dans une première situation ;
[Fig 3] est un schéma illustrant des aspects temporels du procédé selon un mode de réalisation de l'invention dans une deuxième situation;
[Fig 4] est un schéma illustrant des aspects temporels du procédé selon un mode de réalisation de l'invention dans une troisième situation ;
[Fig 5] illustre la structure d'un dispositif selon un mode de réalisation de l'invention.

L'invention est décrite ci-après dans son application, non limitative, au cas d'un véhicule automobile comprenant un boitier de connectivité et système d'info-divertissement (décrits par la suite) et à l'intérieur duquel est présent un terminal utilisateur. Une telle application est purement illustrative et réduite à quelques composants (boitier de connectivité et système info-divertissement) pour la clarté du propos mais, en pratique, l'invention peut être utilisée par plusieurs dizaines ou centaines de composants, interfaces liées au boitier de connectivité et système info-divertissement en particulier, présents dans le véhicule. Par ailleurs, l'invention peut être mise en oeuvre sur tout type de véhicule terrestre à moteur tel qu'une motocyclette, un autocar ou encore un robot dans une usine.

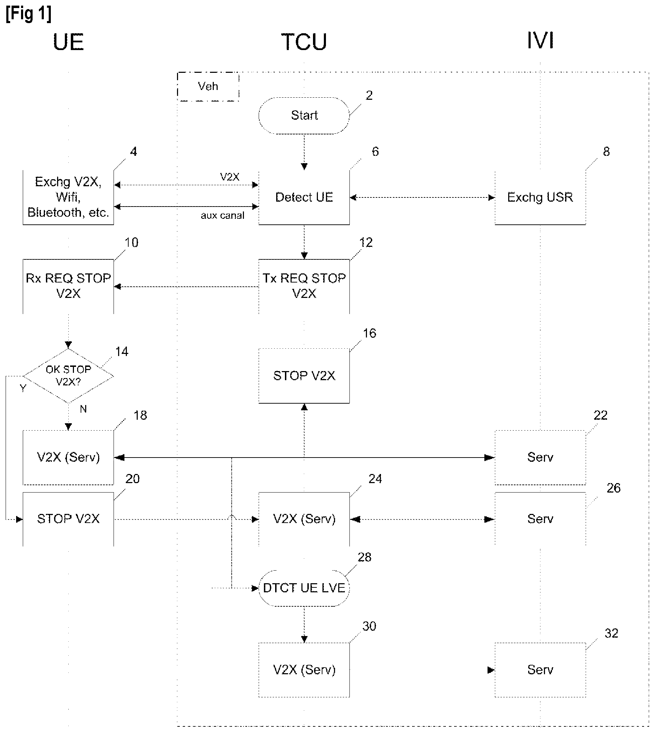

La figure 1 illustre un procédé, selon un mode de réalisation de l'invention.

La figure 1 comporte les étapes du procédé, mises en oeuvre au niveau d'un terminal utilisateur UE (à gauche), d'un boitier de connectivité TCU (au centre) et d'un système d'info-divertissement IVI (à droite).

Le TCU et l'IVI sont compris dans un véhicule Veh.

Le boitier de connectivité TCU est notamment en charge des échanges de données par voie aérienne (liaison radiofréquence) avec des terminaux non-compris dans le véhicule. A ce titre, il comporte typiquement des antennes, processeurs, mémoires et autres composants en charge du traitement des signaux échangés par voie aérienne. Les protocoles supportés par le boitier de connectivité sont par exemple les protocoles cellulaires (3G, 4G, 5G, etc.) ou encore les protocoles courte-portée (wifi, bluetooth, Lora, etc.). Le boitier de connectivité est en outre en mesure de communiquer sur les réseaux internes du véhicule, par exemple via le protocole Ethernet ou CAN, pour Controller Area Network. Il comprend donc notamment des composants en charge des communications sur le canal V2X.

Le système info-divertissement IVI est notamment en charge de services à destination d'occupants du véhicule. Ces services comportent la diffusion, par exemple, de contenus audio via des haut-parleurs et de contenus vidéo / images sur un ou plusieurs écrans, tactiles ou non. Le système info-divertissement est relié aux autres composants du véhicule par des réseaux internes du véhicule, par exemple via le protocole Ethernet ou CAN, pour Controller Area Network. Le système info-divertissement peut également communiquer directement avec un terminal utilisateur (smartphone par exemple) avec des protocoles radiofréquence (bluetooth ou wifi par exemple) ou filaire (USB par exemple).

Un exemple de service mis à disposition d'un occupant du véhicule par le système d'info-divertissement est la génération d'alertes relatives à l'environnement du véhicule, par exemple l'affichage d'une alerte de présence d'un autre véhicule, échangeant sur le canal V2X, caché par un obstacle et susceptible de se retrouver dans la trajectoire du véhicule ou l'affichage d'une alerte relative à des véhicules à l'arrêt derrière un virage.

A une étape 2, le procédé débute. Le procédé est par exemple mis en oeuvre au démarrage du véhicule, c'est-à-dire lorsque le véhicule est déverrouillé par une clef, par exemple via un terminal utilisateur, ou lorsqu'un moteur du véhicule est mis en marche.

A une étape 6, une étape d'identification de la présence du terminal utilisateur à l'intérieur du véhicule et d'une capacité du terminal utilisateur de communiquer sur le canal V2X est mise en oeuvre.

En particulier, dans un mode de réalisation, l'identification de la présence du terminal utilisateur comporte la sous-étape de :
∘ une réception d'une information renseignée à une étape 8 par un occupant du véhicule par l'intermédiaire d'un système d'info-divertissement du véhicule, l'information :
   ▪ indiquant la présence du terminal utilisateur dans le véhicule ; et
   ▪ comportant des données configurées pour l'établissement d'une communication entre le terminal utilisateur et le véhicule.

En particulier, les données configurées pour l'établissement d'une communication entre le terminal utilisateur et le véhicule sont par exemple un élément au moins parmi un nom du terminal, une version de protocole V2X, une adresse (MAC, mail, etc.) du terminal, etc.

Dans un autre mode de réalisation, l'identification de la présence du terminal utilisateur comporte une détection à une étape 4 d'une connexion fondée sur un canal secondaire, aux canal, entre le terminal utilisateur et le véhicule.

En particulier, le canal secondaire est l'un au moins des canaux suivants :
- canal filaire selon un protocole de type bus universel en série, Universal Serial Bus, USB;
- canal sans-fil courte-portée selon un protocole de type wifi ;
- canal sans-fil courte-portée selon un protocole de type bluetooth.

En particulier, l'identification du terminal et du fait qu'il soit susceptible d'échanger sur le canal V2X est faite à partir des données échangées sur le canal auxiliaire. Par exemple, une requête peut-être émise sur le canal secondaire par le TCU pour demander au terminal des précisions sur la possibilité du terminal d'échanger sur le canal V2X et des informations relatives à la connexion du terminal au canal V2X (adresses, modulation, etc.).

Dans un autre mode de réalisation, l'identification de la présence du terminal utilisateur comporte les sous-étape de :
∘ réception d'un message du terminal utilisateur transmis sur le canal V2X ;
∘ extraction d'une information de localisation et/ou d'une information d'horodatage à partir du message reçu ;
∘ identification de la présence du terminal utilisateur à partir de l'information extraite.

A la différence de l'utilisation du canal secondaire, dédié au véhicule, le canal V2X seul n'est pas spécifique au véhicule et il faut donc discriminer les terminaux utilisateurs à proximité du véhicule (piéton typiquement) qui sont à écouter et ceux, à l'intérieur du véhicule, à discriminer. Ainsi, des informations de géolocalisation et/ou d'horodatage sont utilisées. En effet, le canal V2X peut donner une information précise de position à un moment donné et le véhicule peut donc savoir si le terminal utilisateur est dans le véhicule.

A une étape 12, une requête de désactivation sur le terminal utilisateur d'au moins une fonction de communication fondée sur le canal V2X est transmise au terminal utilisateur identifié.

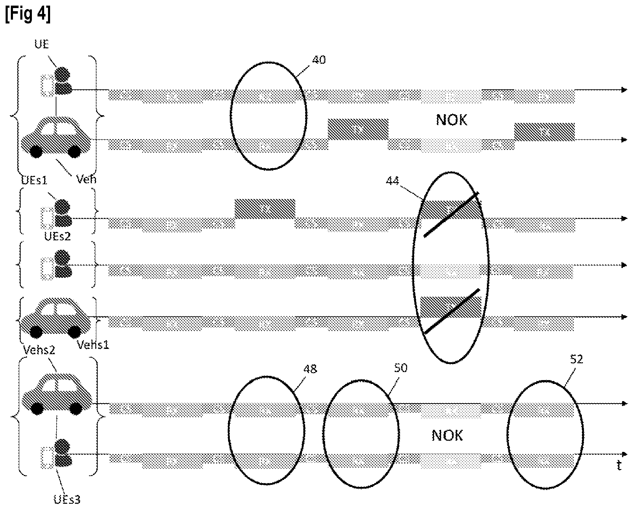

Dans un mode de réalisation principal, la fonction de communication est une fonction de communication est une fonction d'émission. Ainsi, il est demandé au terminal utilisateur de ne plus émettre pour éviter les duplications d'émission sur un même créneau, voir aussi figure 4 ci-après. Une fonction d'émission à désactiver peut-être limitée à un aspect particulier, par exemple à une émission sur une bande de fréquence particulière, le terminal continuant à émettre sur une autre bande de fréquence.

Dans un autre mode de réalisation, la désactivation complète des capacités de communication sur le canal V2X du terminal utilisateur est demandé.

A une étape 10, le requête de désactivation est reçue par le terminal utilisateur est une décision est prise à une étape 14 sur cette requête.

En particulier, la requête peut-être directement soumise à un utilisateur du terminal utilisateur UE. Par exemple, une alerte, sous la forme d'une notification ou d'un pop-up, pour fenêtre apparente, peut-être générée sur UE. L'utilisateur peut alors valider la proposition de désactivation directement, ou désactiver lui-même la fonction V2X (par exemple sur le menu paramètres déroulant du haut vers le bas sur l'écran tactile d'un smartphone).

La requête peut également être automatiquement traitée par le terminal utilisateur, par exemple au moyen d'une configuration préenregistrée par l'utilisateur ou d'usine.

Dans le cas où le terminal utilisateur refuse la désactivation, à une étape 18, le canal V2X continue à être utilisé par le terminal utilisateur UE.

En particulier, le canal V2X continue à être utilisé par UE pour l'exécution d'un service, tel que présenté ci-avant, à destination de l'utilisateur, par exemple conducteur du véhicule.

Dans cette situation, l'exécution du service peut se poursuivre via UE, sans le concours du véhicule, et notamment de sa connexion V2X via le TCU. Ainsi, à une étape 16, sur réception d'un refus de désactivation de la fonction depuis le terminal utilisateur, au moins une deuxième fonction de communication fondée sur le canal V2X est désactivée sur le véhicule.

Dans un mode de réalisation, la fonction de communication et la deuxième fonction de communication sont identiques. C'est-à-dire qu'il n'y a qu'une fonction de communication à activer/désactiver selon le procédé selon l'invention. En particulier, la fonction de communication est une fonction d'émission sur le canal V2X ou une désactivation complète du canal V2X.

Ainsi, le TCU désactive, au moins pour l'émission, son canal V2X afin d'éviter les interférences sur ce canal V2X avec UE.

Pour que le véhicule, notamment via le système d'info-divertissement IVI, continue à bénéficier du service reçu par le canal V2X d'UE, le service est dupliqué sur IVI à une étape 22. Une telle duplication est par exemple opérée par les procédés connus de mirroring, pour mise en miroir, depuis UE vers IVI.

Dans un mode de réalisation, la duplication du service est fondée sur canal secondaire, le canal secondaire étant l'un des canaux suivants :
- canal filaire selon un protocole de type bus universel en série, Universal Serial Bus, USB;
- canal sans-fil courte-portée selon un protocole de type wifi ;
- canal sans-fil courte-portée selon un protocole de type bluetooth.

Dans le cas où UE accepte la désactivation de la fonction, le véhicule prend en charge la fonction de communication sur le canal V2X à une étape 24.

En particulier, dans le mode de réalisation principal, la fonction de communication est la totalité des fonctions de communication, émission et réception, sur le canal V2X. En effet, dans ce mode de réalisation, UE peut continuer à écouter mais arrête d'émettre, les fonctions d'émission étant alors assurées par TCU.

Dans le cas où UE accepte la désactivation de la fonction, TCU échange sur le canal V2X pour mettre à disposition le service. Aussi, TCU reçoit des données relatives au service via le canal V2X et les transfère à IVI pour, à une étape 26, que le service soit effectivement mis à disposition via IVI.

A une étape 28, quel que ce soit UE ou TCU qui assure les échanges, notamment pour la mise à disposition du service, avec le canal V2X, une détection d'un départ du terminal utilisateur de l'intérieur du véhicule intervient.

Selon le mode d'identification du terminal dans le véhicule, notamment à l'étape 6, la détection du départ est mise en oeuvre en conséquence. En particulier, si une déconnexion du canal secondaire intervient, si l'utilisateur indique sur IVI son départ ou encore si un arrêt d'une fonction du véhicule (extinction moteur par exemple) est détectée, le départ est détecté.

Sur détection du départ, réactivation sur le véhicule de la fonction de communication fondée sur le canal V2X à une étape 30. Dans un mode de réalisation, le service peut alors être mis à disposition de l'utilisateur via IVI à une étape 32.

Le départ du terminal utilisateur ne signifie pas nécessairement un départ de l'utilisateur du véhicule et/ou de l'intérêt moindre de maintenir des échanges sur le canal V2X. L'utilisateur peut vouloir déconnecter le canal secondaire (par exemple pour éviter une dépense énergétique d'UE, par exemple en laissant activer le bluetooth) tout en continuant de bénéficier du service. En outre, même dans le cas où l'utilisateur quitte effectivement le véhicule, il peut être pertinent de maintenir les échanges V2X et/ou le service (véhicule autonome sans occupant, échanges liés à la sécurité d'un véhicule stationné, etc.).

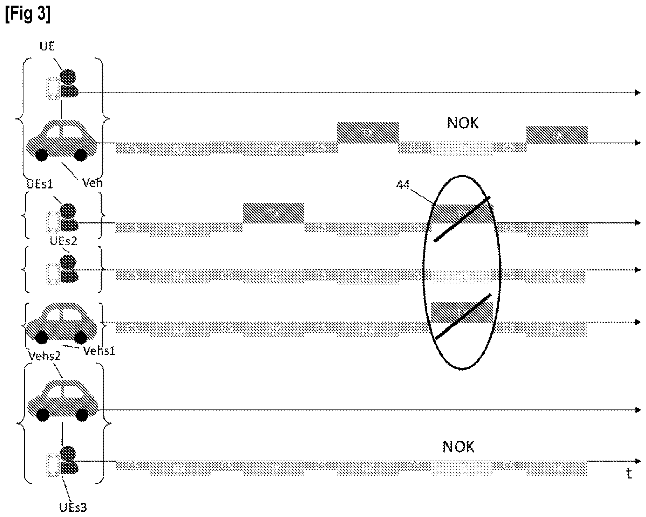

La figure 3 illustre les aspects temporels du procédé décrit ci-avant en référence à la figure 1, pour le mode de réalisation où la fonction de communication à désactiver est à la fois une émission et une réception fondée sur le canal V2X. La figure 4 illustre le mode de réalisation principal où seule la fonction d'émission est à désactiver.

Les notations utilisées sur la figure 3 sont celles décrites ci-avant pour la figure 2.

Le premier groupe d'entités (terminal utilisateur ou véhicule) comprenant UE et Veh illustre la situation où UE a accepté de désactiver la fonction de communication fondée sur le canal V2X. En particulier, la fonction de communication correspond ici à tout échange sur le canal (émission et réception). Aussi, le véhicule Veh seul émet et reçoit, il émet notamment aux créneaux 3 et 5.

Le premier groupe ne peut recevoir, NOK, au créneau quatre du fait de la duplication d'émission par UEs1 et Vehs1 (voir ci-après). Par contre, par rapport à la situation exposée à la figure 2, il n'y a pas de duplication de réception au niveau du créneau 2. Surtout, par rapport à la situation exposée à la figure 2, il n'y a pas duplication d'émission au créneau 5 et donc ce créneau n'est plus perdu.

UEs1, UEs2 et Vehs1 n'étant pas dans un même véhicule, le procédé décrit à la figure 1 n'est pas mis en place. Dès lors, la duplication d'émission 44 au créneau 4 perdure et, comme pour la figure 2, le créneau 4 est perdu.

Le deuxième groupé d'entités comprenant UEs3 et Vehs3 illustre la situation où UE a refusé de désactiver la fonction de communication fondée sur le canal V2X, et assure donc les échanges sur le canal V2X. Dans ce cas, par rapport à la figure 1, la duplication de réception est évitée sur les créneaux 1 à 3. En outre, la réception a bien lieu sur le créneau 5 du fait de l'absence de duplication de l'émission par le premier groupe. Par contre, comme le premier groupe, le deuxième groupe ne peut recevoir, NOK, au créneau quatre du fait de la duplication d'émission par UEs1 et Vehs1.

Sur la figure 4, le mode de réalisation principal décrit ci-avant à la figure 1 est mis en oeuvre et seule la fonction d'émission est désactivée. Ainsi, le créneau 5 n'est pas perdu et la duplication d'émission entre UE et Veh n'intervient pas. Par contre, les duplications de réception 40, 48 et 50 interviennent toujours mais n'impliquent pas de perte totale de créneau temporel. Par rapport à la figure 2, une nouvelle duplication de réception, sans perte de créneau, intervient à 52.

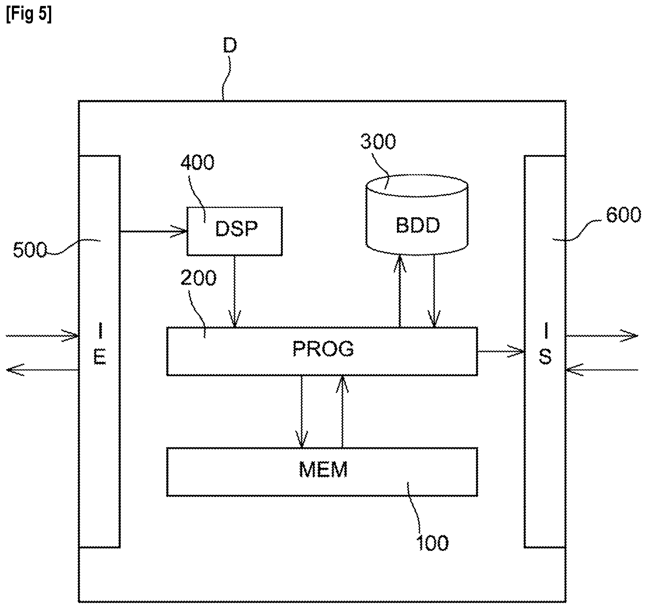

La figure 5 représente un exemple de dispositif D compris mettant en oeuvre au moins certaines des étapes du procédé décrit ci-avant en référence à la figure 1. En particulier, le dispositif D est compris dans TCU et/ou IVI. Le dispositif D est compris dans le véhicule Veh.

Ce dispositif D peut prendre la forme d'un boitier comprenant des circuits imprimés, de tout type d'ordinateur ou encore d'un smartphone.

Le dispositif D comprend une mémoire vive 100 pour stocker des instructions pour la mise en oeuvre par un processeur 200 d'au moins une étape des procédés tels que décrits ci-avant. Le dispositif comporte aussi une mémoire de masse 300 pour le stockage de données destinées à être conservées après la mise en oeuvre du procédé.

Le dispositif D peut en outre comporter un processeur de signal numérique (DSP) 400. Ce DSP 400 reçoit des données pour mettre en forme, démoduler et amplifier, de façon connue en soi ces données.

Le dispositif comporte également une interface d'entrée 500 pour la réception des données mises en oeuvre par des procédés selon l'invention et une interface de sortie 600 pour la transmission des données mises en oeuvre par le procédé.

La présente invention ne se limite pas aux formes de réalisation décrites ci-avant à titre d'exemples ; elle s'étend à d'autres variantes.

Ainsi, il a été décrit un mode de réalisation correspondant à une architecture électronique exemplatif (un composant TCU, un système IVI, etc.) pour un véhicule automobile. La présente invention est également applicable à d'autres architectures électroniques (plusieurs TCUs ou IVIs, etc.).

## Revendications

1. Procédé de gestion d'interférences liées à l'utilisation d'un même canal de communication courte portée véhicule à tout, dit canal V2X, par un terminal utilisateur (UE) et par un véhicule (Veh) terrestre à moteur, le procédé comportant, au niveau du véhicule, les étapes de :
- identification (6) de la présence du terminal utilisateur à l'intérieur du véhicule et d'une capacité du terminal utilisateur de communiquer sur le canal V2X ;
- transmission (12) au terminal utilisateur identifié d'une requête de désactivation sur le terminal utilisateur d'au moins une fonction de communication fondée sur le canal V2X ;
- sur réception d'un refus de désactivation de la fonction depuis le terminal utilisateur, désactivation (16) sur le véhicule d'au moins une deuxième fonction de communication fondée sur le canal V2X.

2. Procédé selon la revendication 1, dans lequel la fonction de communication et la deuxième fonction de communication sont identiques.

3. Procédé selon l'une des revendications précédentes, comportant en outre, après l'étape de désactivation, les étapes de :
- détection (28) d'un départ du terminal utilisateur de l'intérieur du véhicule ;
- sur détection du départ, réactivation de la deuxième fonction de communication fondée sur le canal V2X.

4. Procédé selon l'une des revendications précédentes, dans lequel le canal V2X est configuré pour proposer un service à l'utilisateur, le procédé comportant en outre les étapes de :
- réception (18) de données relatives au service depuis le terminal utilisateur, les données ayant été reçue par le canal V2X du terminal utilisateur ;
- duplication (22) du service sur un système d'info-divertissement du véhicule.

5. Procédé selon la revendication 4, dans lequel la duplication du service est fondée sur canal secondaire, le canal secondaire étant l'un des canaux suivants :
- canal filaire selon un protocole de type bus universel en série, Universal Serial Bus, USB;
- canal sans-fil courte-portée selon un protocole de type wifi ;
- canal sans-fil courte-portée selon un protocole de type bluetooth.

6. Procédé selon l'une des revendications précédentes dans lequel le canal V2X fonctionne selon l'un au moins des protocoles suivant :
- 3GPP C-V2X avec une interface PC5 ;
- 802.11p.

7. Programme informatique comportant des instructions pour la mise en oeuvre du procédé selon l'une quelconque des revendications précédentes, lorsque ces instructions sont exécutées par un processeur (2).

8. Dispositif de gestion d'interférences liées à l'utilisation d'un même canal de communication courte portée véhicule à tout, dit canal V2X, par un terminal utilisateur (UE) et par un véhicule (Veh) terrestre à moteur, le dispositif étant configuré pour être compris dans le véhicule et comportant au moins une mémoire et au moins un processeur agencés pour effectuer les opérations de :
- identification de la présence du terminal utilisateur à l'intérieur du véhicule et d'une capacité du terminal utilisateur de communiquer sur le canal V2X ;
- transmission au terminal utilisateur identifié d'une requête de désactivation sur le terminal utilisateur d'au moins une première fonction de communication fondée sur le canal V2X ;
- sur réception d'un refus de désactivation de la première fonction depuis le terminal utilisateur, désactivation sur le véhicule d'au moins une deuxième fonction de communication fondée sur le canal V2X.

9. Véhicule (Veh) terrestre à moteur comportant le dispositif selon la revendication 8.

## Patentansprüche

1. Verfahren zur Bewältigung von Interferenzen im Zusammenhang mit der Nutzung desselben Kurzstrecken-Fahrzeug-zu-Alles-Kommunikationskanals, V2X-Kanal genannt, durch ein Benutzerterminal (UE) und durch ein landgestütztes Kraftfahrzeug (Veh), wobei das Verfahren Folgendes umfasst: Fahrzeugniveau, die Schritte von:
- Identifizierung (6) der Anwesenheit des Benutzerterminals im Fahrzeug und einer Fähigkeit des Benutzerterminals, auf dem V2X-Kanal zu kommunizieren;
- Übermittlung (12) einer Anfrage zur Deaktivierung mindestens einer auf dem V2X-Kanal basierenden Kommunikationsfunktion auf dem Benutzerterminal an das identifizierte Benutzerterminal;
- bei Erhalt einer Weigerung, die Funktion vom Benutzerterminal zu deaktivieren, Deaktivierung (16) mindestens einer zweiten Kommunikationsfunktion auf Basis des V2X-Kanals am Fahrzeug.

2. Verfahren nach Anspruch 1, wobei die Kommunikationsfunktion und die zweite Kommunikationsfunktion identisch sind.

3. Verfahren nach einem der vorhergehenden Ansprüche, weiterhin umfassend nach dem Deaktivierungsschritt die Schritte:
- Erkennen (28) einer Entfernung des Benutzerterminals aus dem Fahrzeuginneren;
- bei Detektion der Abreise Reaktivierung der zweiten Kommunikationsfunktion auf Basis des V2X-Kanals.

4. Verfahren nach einem der vorhergehenden Ansprüche, bei dem der V2X-Kanal so konfiguriert ist, dass er dem Benutzer einen Dienst anbietet, wobei das Verfahren weiterhin die Schritte umfasst:
- Empfang (18) von Daten bezüglich des Dienstes vom Benutzerterminal, wobei die Daten über den V2X-Kanal des Benutzerterminals empfangen wurden ;
- Vervielfältigung (22) des Dienstes auf einem Infotainmentsystem des Fahrzeugs.

5. Verfahren nach Anspruch 4, bei dem die Vervielfältigung des Dienstes auf einem sekundären Kanal basiert, wobei der sekundäre Kanal einer der folgenden Kanäle ist:
- Kabelgebundener Kanal gemäß einem universellen seriellen Busprotokoll, Universal Serial Bus, USB ;
- Drahtloser Nahbereichskanal unter Verwendung eines WLAN-Protokolls;
- Drahtloser Nahbereichskanal unter Verwendung eines Bluetooth- Protokolls .

6. Verfahren nach einem der vorhergehenden Ansprüche, bei dem der V2X-Kanal nach mindestens einem der folgenden Protokolle arbeitet:
- 3GPP C-V2X mit einer PC5-Schnittstelle;
- 802.11p.

7. Computerprogramm, das Anweisungen zur Implementierung des Verfahrens nach einem der vorhergehenden Ansprüche umfasst, wenn diese Anweisungen von einem Prozessor (2) ausgeführt werden.

8. Gerät zur Bewältigung von Interferenzen im Zusammenhang mit der Nutzung desselben Kurzstrecken-Fahrzeug-zu-Alles-Kommunikationskanals, genannt V2X-Kanal, durch ein Benutzerterminal (UE) und durch ein landgestütztes Kraftfahrzeug ( Veh ), wobei das Gerät dafür konfiguriert ist im Fahrzeug enthalten sein und mindestens einen Speicher und mindestens einen Prozessor umfassen , der so angeordnet ist, dass er die folgenden Vorgänge ausführt:
- Identifizierung der Anwesenheit des Benutzerterminals im Fahrzeug und einer Fähigkeit des Benutzerterminals, auf dem V2X-Kanal zu kommunizieren;
- Übermittlung einer Anfrage zur Deaktivierung mindestens einer ersten Kommunikationsfunktion auf Basis des V2X-Kanals auf dem Benutzerterminal an das identifizierte Benutzerterminal;
- bei Erhalt einer Weigerung, die erste Funktion vom Benutzerterminal zu deaktivieren, Deaktivierung mindestens einer zweiten Kommunikationsfunktion auf Basis des V2X-Kanals im Fahrzeug.

9. Motorisiertes Landfahrzeug ( Veh ), umfassend die Vorrichtung nach Anspruch 8.

## Claims

1. Method for managing interference linked to the use of the same short-range vehicle-to-everything communication channel, called V2X channel, by a user terminal (UE) and by a land motor vehicle ( Veh ), the method comprising, at the vehicle level, the steps of:
- identification (6) of the presence of the user terminal inside the vehicle and of a capacity of the user terminal to communicate on the V2X channel;
- transmission (12) to the identified user terminal of a request for deactivation on the user terminal of at least one communication function based on the V2X channel;
- upon receipt of a refusal to deactivate the function from the user terminal, deactivation (16) on the vehicle of at least one second communication function based on the V2X channel.

2. The method of claim 1, wherein the communication function and the second communication function are identical.

3. Method according to one of the preceding claims, further comprising, after the deactivation step, the steps of:
- detection (28) of a departure of the user terminal from inside the vehicle;
- upon detection of departure, reactivation of the second communication function based on the V2X channel.

4. Method according to one of the preceding claims, in which the V2X channel is configured to offer a service to the user, the method further comprising the steps of:
- receiving (18) service - related data from the user terminal, the data having been received via the V2X channel of the user terminal;
- duplication (22) of the service on a vehicle infotainment system.

5. The method of claim 4, wherein the duplication of the service is based on secondary channel, the secondary channel being one of the following channels:
- wired channel according to a universal serial bus (USB) protocol;
- short-range wireless channel using a wifi-type protocol;
- short-range wireless channel using a Bluetooth- type protocol.

6. Method according to one of the preceding claims in which the V2X channel operates according to at least one of the following protocols :
- 3GPP C-V2X with PC5 interface;
- 802.11p.

7. Computer program comprising instructions for implementing the method according to any one of the preceding claims, when these instructions are executed by a processor (2).

8. Device for managing interference linked to the use of the same short-range vehicle-to-everything communication channel, called V2X channel, by a user terminal (UE) and by a land motor vehicle ( Veh ), the device being configured to be included in the vehicle and comprising at least one memory and at least one processor arranged to carry out the operations of:
- identification of the presence of the user terminal inside the vehicle and of a capacity of the user terminal to communicate on the V2X channel;
- transmission to the identified user terminal of a request to deactivate on the user terminal at least one first communication function based on the V2X channel;
- upon receipt of a refusal to deactivate the first function from the user terminal, deactivation on the vehicle of at least one second communication function based on the V2X channel.

9. Land motor vehicle ( Veh ) comprising the device according to claim 8.
